# EUROPEAN PATENT SPECIFICATION

(11) **EP 1 346 929 B1**
(45) Date of publication and mention of the grant of the patent: **30.11.2005**
(21) Application number: 02425169.6
(22) Date of filing: 19.03.2002
(51) Int. Cl.: B65G 1/133, B65G 1/137, A61J 7/00

(54) **Automatic modular store**
Automatisches modularartiges Magazin
Magasin modulaire automatique

(43) Date of publication of application: 24.09.2003
(73) Proprietor: SWISSLOG ITALIA S.p.A., 20128 Milano (IT)
(72) Inventor: Davolio, Maurizio, I-41058 Vignola (MO) (IT); Vecchi, Roberto, I-41057 Spilamberto (MO) (IT)
(74) Representative: Provvisionato, Paolo

(56) References cited:
- EP-A- 0 022 441
- EP-A- 0 329 600
- CH-A- 424 635

## Description

The present invention relates to the field of automatic stores.

The invention has been developed particularly but not exclusively with regard to an automatic store for the storage, retrieval and distribution of groups of individual products. A particularly important, but non-limiting field of application of the present invention is that of the management of stores of drugs and other pharmaceutical or medical products, with particular reference to the selective distribution of these products within hospital establishments in accordance with requirements for the administration of the products to individual patients. There is an ever greater need to provide automatic systems and stores in which medical products are stored in individual doses and from which these products can be withdrawn, grouped together in various ways, on the basis of instructions or orders which reflect the specific prescriptions for the use of medical products and for the administration of drugs to the various patients under treatment.

For simplicity and clarity of explanation, reference will be made below to the grouping-together of medical products but, naturally, the present invention may equally well be applied to other fields which have similar problems such as, for example, for fulfilling orders for spare parts for motor vehicles or other machines, for the grouping-together of components for the manufacture of industrial products such as, for example, electronic components, small metal parts, and the like.

The documents US-5468110, US-5880443, US-6217273 describe storage systems in which the various products are stowed in an orderly manner in locations which are arranged on one level and are therefore identified by two Cartesian coordinates x, y, or which are arranged on a cylinder and are therefore identified by two polar coordinates a, z.

The document EP-A-0 329 600 describes an automatic store comprising a storage structure and a plurality of storage elements defining stowage locations for products spatially distributed in the storage structure. The store also comprises collecting means movable towards predetermined locations identified by three coordinates (box, shelf and row), and processing and control means for identifying the coordinates corresponding to selected products, bringing about movement of the collecting means towards the coordinates, and operating the collecting means in order to collect the selected products stowed in the locations.

The above-mentioned systems of the prior art have a series of disadvantages which greatly limit their usability, particularly within hospital establishments. First of all, their capacity in terms of the number of products which can be stored is quite small, particularly in relation to the considerable size of the systems. Moreover, their expandability is quite limited, since the capacity and/or the productivity of these known systems can be increased solely by multiplying the number of automatic stores. Moreover, in the particular case of cylindrical or tower-shaped store structures, there is a minimum limit to the number of products which can be stored, below which the size of the system and its overall cost become so preponderant in relation to the benefits afforded by automated management, that their use is not recommended.

Another disadvantage of the storage systems of the prior art is that the products for fulfilling an order are extracted from the store one after another, which may lead to very long waiting times for the fulfilment of a series of orders. In other words, the systems of the prior art do not provide particular solutions or measures that are optimized for the rapid retrieval of products with a so-called high turnover, or for the rapid fulfilment of a large number of orders each comprising a small number of products such as, for example, orders for products for the daily administration of drugs to each patient within a hospital establishment. Finally, the productivity of the systems of the prior art is a direct consequence purely of the speed of movement of the means for retrieving the products from a particular location of a product in the store to the area for the despatch of the product, and from there to a new location of a product in the store.

A further disadvantage of the storage systems of the prior art, which is particularly evident in stores that extend on one level but which may also be found to some extent in cylindrical or tower-shaped stores, is the need to program periods of interruption of the product retrieval and distribution operations to permit operations for the resupply or restocking of products in the store. During these operations for the restocking of stored products, the known systems are not available or are available only to a reduced extent for product-removal operations in order to fulfil orders. These periods of interruption reduce the productivity, usefulness and overall efficiency of the automatic stores with regard to their primary functions of fulfilling orders, with a consequent increase in the overall management costs which the above-mentioned periods of inactivity involve.

There is a risk that the disadvantages indicated above will greatly limit the spread of automated systems for the management of orders for medical prescriptions, which could otherwise contribute enormously to the reduction of the management costs of hospital establishments, increasing their overall efficiency and enabling the personnel employed in the manual selection and distribution of drugs and medical products in general to be assigned to more skilled activities.

The object of the present invention is therefore to overcome the disadvantages described above, by providing an automated store which is simple, economical and efficient, particularly but not exclusively when it is used to group together drugs and medical products to be distributed within automated systems used in hospital establishments.

Another object of the invention is to provide an automated store which is compact in terms of space occupied in relation to the quantity of products which can be stored, and which can also be adapted to the productivity requirements of the specific application of use in a flexible manner, since it can be configured with sizes proportional to the number of products actually to be stored but can be expanded easily and economically to satisfy increased storage or productivity requirements.

In order to achieve the objects indicated above, the subject of the invention is an automated store for the retrieval and distribution of products from the store which have the characteristics indicated in the appended claims.

Automatic stores formed in accordance with the principles of the present invention have the undoubted advantage of enabling orders to be fulfilled quickly by virtue of their ability selectively to perform multiple withdrawals of products from the store in parallel.

Another advantage is that a predetermined group of products can be prepared ready for withdrawal during the operations to withdraw the preceding groups of products.

A further advantage is that the automated store can be organized and managed in order to satisfy, in an optimized manner, requirements for the withdrawal of products with a high turnover.

Yet another advantage is the modular structure of the store, in which each individual module is compact and of simple construction, which permits the flexible configuration of stores having different storage capacities, as well as permitting easy and economical reconfiguration of existing stores, for example, in order to increase their capacity or to subdivide a large store into two or more smaller stores, all with compact dimensions so as to optimize the space available.

A particularly important advantage is the ability to restock with products even during operations to select and remove products from the store, without the need for programmed interruptions for this purpose.

Further characteristics and advantages will become clear from the following detailed description of an embodiment given with reference to the appended drawings, provided purely by way of non-limiting example, in which:
Figure 1 is a perspective view of an automatic store according to the present invention,
Figure 2 is an elevational view of the store, taken on the arrow II of Figure 1,
Figure 3 is a plan view of one of the modular units of the store, taken on the arrow III of Figure 2, and
Figure 4 is a perspective view showing a detail of the device for the retrieval of products from the store of the preceding drawings, on an enlarged scale.

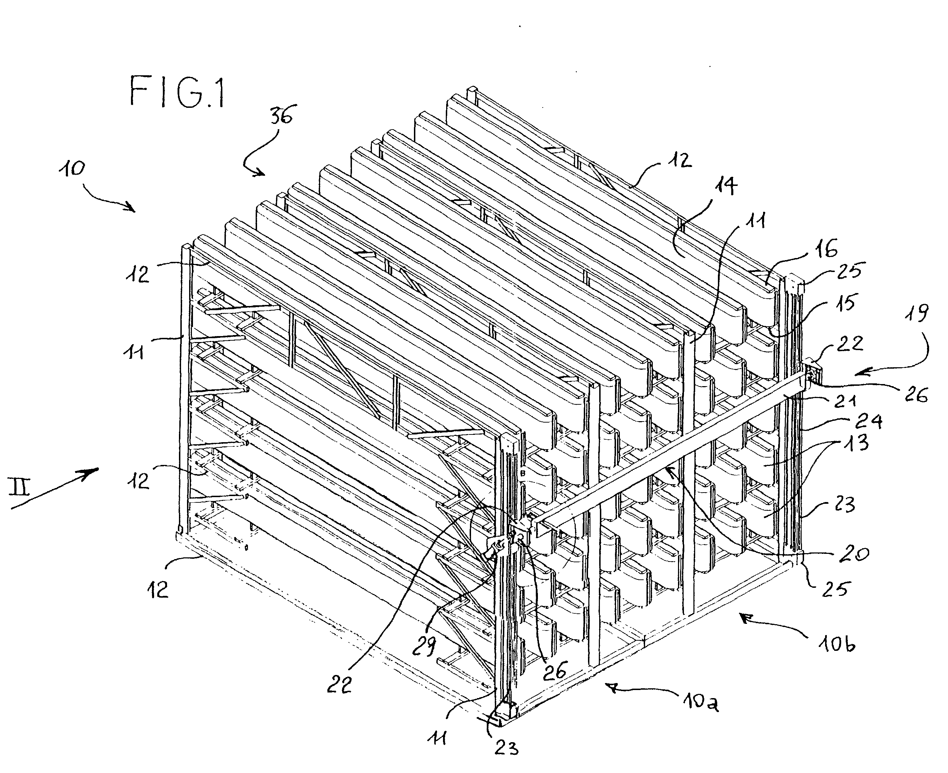

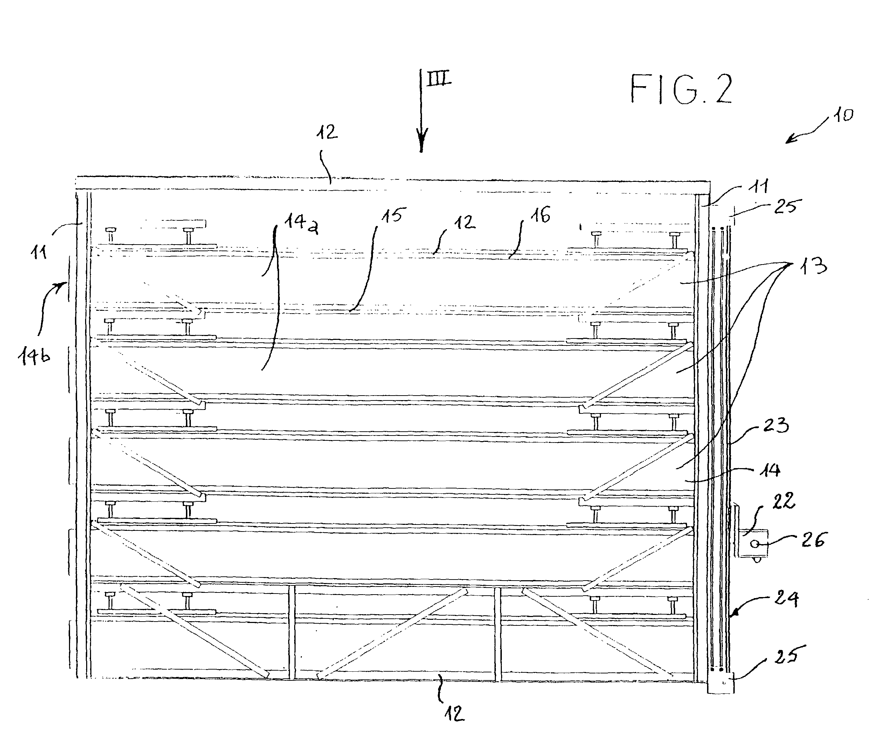

With reference now to Figures 1 to 3, a modular store, generally indicated 10, comprises a load-bearing structure formed by pillars 11 and beams 12, joined together by known structural metalwork techniques. The structure of the store 10 as a whole preferably comprises several adjacent modular units 10a, 10b joined together. Each modular unit supports a predetermined number of storage units 13 each comprising an endless belt 14 or similar element, such as a chain or a band, flattened on two sides 14a which are of predominant longitudinal extent in comparison with two arcuate end portions 14b. The end portions 14b extend partially around at least two corresponding end rollers, wheels, or pulleys (not shown in the drawings) having parallel and substantially vertical axes of rotation. The end rollers are supported by respective shafts the ends of which are mounted on two opposed support bars 15, 16 of the storage unit 13. Drive means, not shown and of generally known type, are coupled with at least one of the two rollers of each belt 14 in order selectively to set the belt 14 in motion along its endless path.

In the particular embodiment shown in the drawings, which should not be considered as limiting but purely as an example of the main technical characteristics of the present invention, the modular unit 10a supports altogether fifteen storage units 13, aligned in three uniformly-spaced vertical columns. Again by way of example, the adjacent modular unit 10b, on the other hand, has twice the capacity and comprises thirty storage units 13 aligned in six uniformly-spaced vertical columns.

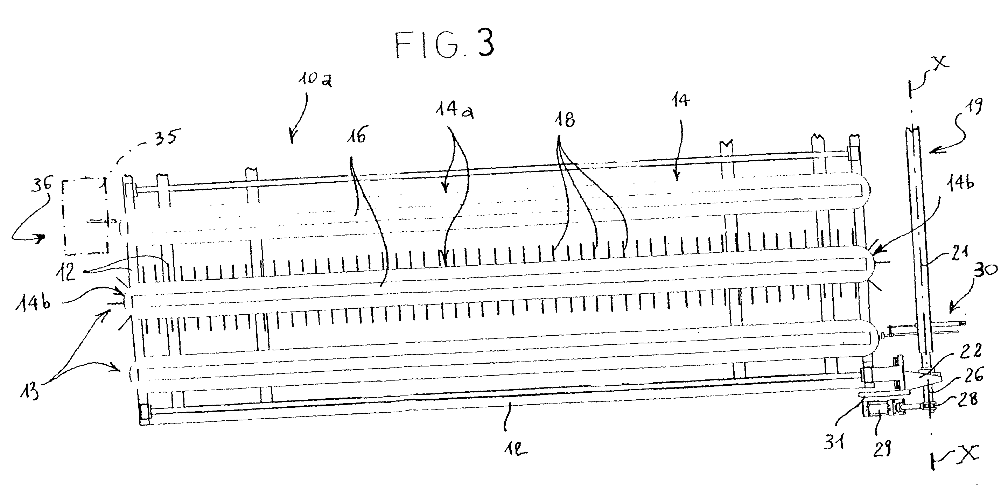

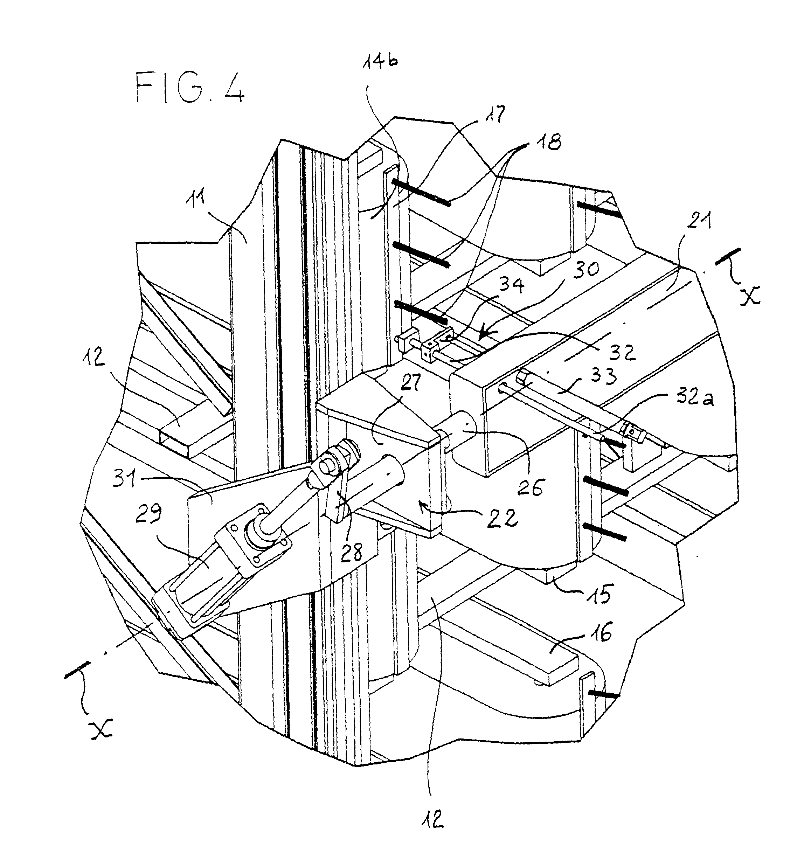

As can best be seen in Figure 4, an array of uniformly-spaced plates 17 is fixed along the entire extent of each belt 14. Projecting from the plates 17 are one or more suspension pins 18 suspended on which, in use, are the products stored, or their packages, which are provided with holes, openings, hooks or the like, for the purpose. On each belt 14, the suspension pins 18 together form several annular arrays of which, for reasons of clarity of illustration, only one is shown, on the central storage unit of Figure 3. Preferably, each suspension pin 18 is inclined slightly upwards in order better to hold the products or the packages which are suspended thereon. The drive means for rotating each belt 14, possibly with the aid of sensor means for detecting the position of the belt 14 and/or of the pins 18, are activated in a manner such that the plates 17 can be disposed selectively in the region of each of the end portions 14b of the belts 14 so that the respective pins 18 project substantially perpendicularly relative to the sides 14a.

A product collecting unit 20 mounted in the region of the front face 19 of the store 10 comprises a movable bar 21 supported at its ends by carriages 22 mounted for sliding on vertical guides 23 fixed to two respective pillars 11. In the embodiment shown in the drawings, the carriages 22 are operated selectively by means of an endless belt 24 extending around two sets of pulleys 25, at least one of which is coupled with a drive unit (not shown), in known manner. In greater detail, as can be seen in Figure 4, two respective axle shafts 26 mounted at the ends of the movable bar 21 are supported for rotation by the carriages 22. At least one of the two axle shafts 26 extends through a wall 27 of the carriage 22 and terminates in an operating lever 28 articulated to an actuator 29 mounted on a plate 31 fixed to the carriage 22 for selectively bringing about pivoting of the movable bar 21 about the substantially horizontal axis X-X of the axle shafts 26, as will be described further below.

Collecting devices 30 mounted on the movable bar 21 are arranged facing respective end portions 14b of the belts 14. For clarity of illustration, only the collecting device 30 closest to one end of the movable bar 21 is shown in the drawings. The collecting device 30 comprises a tube 32 mounted for sliding on the movable bar 21 and coupled with a linear actuator 33 by means of a connector 34. The tube 32 is connected, at its end 32a remote from the belt 14, to a duct (not shown) communicating with means for generating a reduced pressure, for example, a vacuum pump.

Purely by way of example, Figure 3 also shows schematically in chain line, a product-restocking unit 35 mounted in the region of the rear face 36 of the store 10. This restocking unit 35 may be structurally similar to the collecting unit 20 or of another type known to persons skilled in the art.

One or more store modules 10a, 10b may be combined to achieve a capacity which satisfies the needs of each specific application. An automatic store 10 resulting from the combination of several modular units 10a, 10b may comprise a single collecting unit 20 with a single movable bar 21 which extends along the entire width of the front face 19 and carries a number of collecting devices 30 equal to the number of columns of storage units 13. Alternatively, particularly if there is a large number of columns of storage units 13, or to increase the operative flexibility of the automatic store 10, it is possible to provide two or more adjacent and independent collecting units 20, which together cover the width of the front face 19 of the automatic store 10 and which in any case together carry a number of collecting devices 30 equal to the number of columns of storage units 13.

An electronic processor, not shown, provides for the control and activation of the automatic store 10. In particular, the electronic processor is programmed to activate the selective and independent movement of each drive unit associated with each belt 14 as well as to activate the movement of the carriages 22, and hence the selective lifting and lowering of the movable bar 21, as well as the selective pivoting of the movable bar 21 under the control of the actuator 29. The electronic processor also brings about, by means of the actuators 33, the selective movement of each collecting device 30 towards and away from a corresponding arcuate end portion of a belt 14, as well as selective communication of each tube 32 with the reduced-pressure circuit. If the restocking unit 35 situated in the region of the rear face 36 of the automatic store 10 is provided, the same electronic processor may provide for the control of the operations for the restocking of products in the store. If required, the restocking unit 35 may also act as a device for the discharge of products from the store.

In use, a predetermined number of products is stored in the automatic store 10. The products may be loaded either manually or by means of the restocking unit 35 in the region of the rear face 36 of the store. In particular situations, according to the type of application for which the automatic store 10 is intended, there may also be provision for the loading and/or unloading of a selected number of products, for example, but in non-limiting manner, products with a high turnover, along the sides of the store, from which almost half of the total number of pins 18 fixed to the belts of the outermost columns of storage units 13 project. The products are suspended on the pins 18 directly, or by means of their packaging. According to the dimensions and size of the products one or more products, preferably identical to one another, may be loaded on each pin 18. In any case, the precise position and distribution of products within the automatic store 10 is determined by the specific type of application and of use of the store, according to requirements for the retrieval and distribution of the products in order to fulfil efficiently the withdrawal orders which are processed in succession by the electronic processor. Variations in the implementation and use of loading and unloading devices of the store may be provided for according to the requirements of use and, in particular, to requirements with regard to speed of operation. For example, a single device having a dual loading and unloading function may be positioned in the region of the front or rear face of the store. Alternatively two devices with combined loading and unloading functions may be positioned at the front or at the rear. In another variant, there may be two devices, of which one has a combined loading and unloading function and the other solely an unloading function, and which are positioned in the region of the front face and in the region of the rear face of the store, respectively. It is also possible to provide for other combinations and variations, also taking advantage of the access to the store at its sides, as mentioned above. Naturally, the store may be loaded by either manual or automatic methods according to the requirements of the specific installation.

When an order is to be fulfilled, the electronic processor analyzes the products required and finds the store location in which they have previously been stored. For this purpose, the electronic processor reads a reference map which is preferably stored in a mass memory of the electronic processor and which associates each product with one or more respective pins 18. Each pin 18 is identified in the memory of the processor by a series of coordinates which represent:
- the position of the pin 18 on the respective plate 17,
- the position of the plate 17 along the respective belt 14, starting from a predetermined zero point,
- the level or height at which the storage unit 13 of which the belt 14 forms part is disposed, and
- the particular column of which the said storage unit 13 forms part.

These coordinates may be represented by a set of four whole numbers which may be reduced to a set of three numbers if each plate 17 carries a single pin 18 or several pins 18 each with the same type of product.

The electronic processor then selectively operates the individual drive units of each storage unit 13 in order to cause the pins 18 carrying the products requested to project from the front face 19 of the automatic store 10. The electronic processor can be programmed to optimize the presentation of the products at the front face 19 of the automatic store according to the specific products requested for each order, for example, by identifying the largest number of products which can be presented on the same level of the store, that is, at the same height from the ground. The processor then brings about vertical movement of the movable bar 21 until the desired level at which one or more products to be withdrawn in order to fulfil the specific order is reached.

When the movable bar 21 is at the desired height, the electronic processor brings about selective approach of the collecting units 30 facing the pins 18 on which the products to be withdrawn are stored. By virtue of the selective suction brought about by the electronic processor and exerted by the tubes 32 on the products required or their packages, and the subsequent return of the collecting units 30 to the retracted position, the desired products or their packages are simultaneously slipped off the pins 18.

In order to distribute the products withdrawn from the pins 18, the electronic processor causes the movable bar 21 to descend to a deposition, transporter or conveyor surface (not shown) which extends substantially along the entire length of the movable bar 21 and on which the products are deposited by virtue of a pivoting movement of the movable bar 21 brought about by the actuator 29, and the interruption of the suction exerted by the tubes 32 on the selected products or their packages, ready for subsequent collection and distribution by methods known to persons skilled in the art.

An important feature of the automatic store of the present invention is that the belt 14 of each storage unit 13 which does not hold a product concerned in the product-withdrawal operations can also be moved during the withdrawal operations because none of its pins 18 interferes with the pins of other storage units 13 or with the collecting unit 20. This feature allows the electronic processor, which is programmed for the purpose, to prepare successive groups of products for withdrawal beforehand, even whilst the withdrawal of products of a previous group is being performed. This leads to two substantial advantages: from the constructional point of view, the speed of movement of the belts 14 does not necessarily have to be fast in order nevertheless to achieve high productivity in terms of product consignment and order fulfilment, since the belts 14 can be moved independently whilst product-withdrawal operations are being performed from other belts 14. Moreover, the logical management of the fulfilment of the orders can be optimized by implementing, in the electronic processor, algorithms and programs such as to minimize product-withdrawal and order-fulfilment times so as to take advantage of the operation of the collecting unit 20 at full speed and without dead times.

Another particularly advantageous characteristic is that a plurality of products can be withdrawn simultaneously by means of the collecting unit 20 by the operation of several collecting devices 30 in parallel on several pins 18 which are aligned at the same level, at the same height from the ground.

Naturally, the principle of the invention remaining the same, the structural features and forms of embodiment may be varied widely without thereby departing from the scope of the present invention as defined in the claims.

## Claims

1. An automatic store comprising
- a main support structure (11, 12),
- at least one storage unit (13) comprising a stowage member (14) which extends along an endless path, and
- a plurality of storage elements (17, 18) mounted on the stowage member (14) and movable along the endless path as a result of an activation of the storage unit (13),
- the storage elements being pins (18) mounted on support means (17) fixed to the stowage member (14) in positions spaced uniformly along the endless path and defining stowage locations for products
- the stowage locations being spatially distributed in the storage unit and identified by a set of at least four coordinates,
the store also comprising
- collecting means movable towards predetermined locations identified by the coordinates, and
- processing and control means for identifying the coordinates corresponding to selected products, bringing about movement of the collecting means towards the coordinates, and operating the collecting means in order to collect the selected products stowed in the locations.

2. An automatic store according to Claim 1, **characterized in that** at least one of the coordinates is representative of the position of each location relative to a predetermined origin.

3. An automatic store according to Claim 2, **characterized in that** the stowage member comprises endless belt means (14) with two substantially parallel, straight sides (14a) defining a greater portion of the endless path, connected by arcuate end portions (14b) extending at least partially around roller, wheel or pulley means which can be rotated selectively in order to drive the belt means (14) along the endless path.

4. An automatic store according to any one of Claims 1 to 3, **characterized in that** it comprises a plurality of storage units (13) aligned in an orderly manner in rows and columns.

5. An automatic store according to Claim 4, **characterized in that** the main support structure (10) comprises at least two adjacent portions (10a, 10b) joined together, each of the portions supporting a predetermined number of storage units (13).

6. An automatic store according to Claim 5, **characterized in that** the stowage member (14) of each storage unit (13) is movable along the endless path independently of each of the other stowage members (14).

7. An automatic store according to any one of the preceding claims, **characterized in that** the collecting means (20) comprise an array of collecting devices (30) which can be activated selectively in parallel in order simultaneously to collect at least two products stowed in different locations.

8. An automatic store according to Claim 7, **characterized in that** the collecting means comprise a plurality of collecting members mounted in alignment on a bar member (21) movable relative to the main structure (10) of the automatic store.

9. An automatic store according to Claim 8, **characterized in that** each collecting member comprises a collecting element (32) movable selectively towards and away from a corresponding product stowage location.

10. An automatic store according to Claim 8, **characterized in that** the movable bar member (21) is mounted so as to be movable selectively upwards and downwards on the main structure (10) of the automatic store.

11. An automatic store according to Claim 10, **characterized in that** the movable bar (21) is mounted for pivoting about a transverse axis (X-X) in order to collect the products from the predetermined locations and to deposit them in a deposition area.

12. An automatic store according to any one of the preceding claims, **characterized in that** it comprises a main structure (10) with a first face (19) in the region of which the collecting means (20) are disposed, restocking means (35) for storing products in selective locations of the store being disposed in the region of a second face (36) and/or of at least one side of the store.

13. An automatic store according to Claim 12, **characterized in that** the collecting means (20) and the restocking means (35) are capable of simultaneous operative activation.

14. An automatic store according to Claim 12 or Claim 13, **characterized in that** the restocking means (35) incorporate a functional capacity for the discharge of products from the store.

## Patentansprüche

1. Automatisches Magazin mit:
- einer Hauptstützstruktur (11, 12),
- mindestens einer Lagereinheit (13) mit einem Verstauelement (14), das sich entlang einer Endlosbahn erstreckt, und
- mehreren Lagerelementen (17, 18), die an dem Verstauelement (14) montiert und aufgrund einer Aktivierung der Lagereinheit (13) entlang der Endlosbahn beweglich sind,
- wobei es sich bei den Lagerelementen um Stifte (18) handelt, die an Stützmitteln (17) montiert sind, die an einheitlich entlang der Endlosbahn beabstandeten Positionen am Verstauelement (14) befestigt sind und Verstaustellen für Produkte definieren,
- wobei die Verstaustellen räumlich in der Lagereinheit verteilt und durch einen Satz von mindestens vier Koordinaten identifiziert sind,
wobei das Magazin weiterhin Folgendes aufweist:
- Holmittel, die zu vorbestimmten, durch die Koordinaten identifizierten Stellen beweglich sind, und
- Verarbeitungs- und Steuermittel, um die gewählten Produkten entsprechenden Koordinaten zu identifizieren, die Bewegung der Holmittel zu den Koordinaten zu veranlassen und die Holmittel zu betätigen, um die an den Stellen verstauten gewählten Produkte zu holen.

2. Automatisches Magazin nach Anspruch 1, **dadurch gekennzeichnet, dass** mindestens eine der Koordinaten für die Position jeder Stelle bezüglich eines vorbestimmten Ursprungs repräsentativ ist.

3. Automatisches Magazin nach Anspruch 2, **dadurch gekennzeichnet, dass** das Verstauelement Endlosbandmittel (14) mit zwei im Wesentlichen parallelen, geraden Seiten (14a) aufweist, die einen größeren Abschnitt der Endlosbahn definieren und durch bogenförmige Endabschnitte (14b) verbunden sind, die sich mindestens teilweise um Rollen-, Rad- oder Scheibenmittel erstrecken, die gezielt gedreht werden können, um die Bandmittel (14) entlang der Endlosbahn zu treiben

4. Automatisches Magazin nach einem der Ansprüche 1 bis 3, **dadurch gekennzeichnet, dass** es mehrere Lagereinheiten (13) aufweist, die geordnet in Reihen und Spalten ausgerichtet sind.

5. Automatisches Magazin nach Anspruch 4, **dadurch gekennzeichnet, dass** die Hauptstützstruktur (10) mindestens zwei miteinander verbundene benachbarte Abschnitte (10a, 10b) aufweist, wobei jeder der Abschnitte eine vorbestimmte Zahl von Lagereinheiten (13) stützt.

6. Automatisches Magazin nach Anspruch 5, **dadurch gekennzeichnet, dass** das Verstauelement (14) jeder Lagereinheit (13) unabhängig von jedem der anderen Verstauelemente (14) entlang der Endlosbahn beweglich ist.

7. Automatisches Magazin nach einem der vorhergehenden Ansprüche, **dadurch gekennzeichnet, dass** die Holmittel (20) eine Gruppe von Holvorrichtungen (30) aufweisen, die gezielt parallel aktiviert werden können, um mindestens zwei an verschiedenen Stellen verstaute Produkte gleichzeitig zu holen.

8. Automatisches Magazin nach Anspruch 7, **dadurch gekennzeichnet, dass** die Holmittel mehrere Holglieder aufweisen, die fluchtend an einem Stangenglied (21) montiert sind, das bezüglich der Hauptstruktur (10) des automatischen Magazins beweglich ist.

9. Automatisches Magazin nach Anspruch 8, **dadurch gekennzeichnet, dass** jedes Holglied ein Holelement (32) aufweist, das gezielt zu einer entsprechenden Produktverstaustelle hin und davon weg beweglich ist.

10. Automatisches Magazin nach Anspruch 8, **dadurch gekennzeichnet, dass** das bewegliche Stangenglied (21) so montiert ist, dass es gezielt an der Hauptstruktur (10) des automatischen Magazins auf und ab beweglich ist.

11. Automatisches Magazin nach Anspruch 10, **dadurch gekennzeichnet, dass** die bewegliche Stange (21) so montiert ist, dass sie um eine Querachse (X - X) schwenkt, um die Produkte von den vorbestimmten Stellen zu holen und sie in einem Ablegebereich abzulegen.

12. Automatisches Magazin nach einem der vorhergehenden Ansprüche, **dadurch gekennzeichnet, dass** es eine Hauptstruktur (10) mit einer ersten Fläche (19) in dem Bereich, in dem die Holmittel (20) angeordnet sind, aufweist, wobei Auffüllmittel (35) zum Lagern von Produkten an gezielten Stellen des Magazins im Bereich einer zweiten Fläche (36) und/oder mindestens einer Seite des Magazins angeordnet sind.

13. Automatisches Magazin nach Anspruch 12, **dadurch gekennzeichnet, dass** die Holmittel (20) und die Auffüllmittel (35) gleichzeitig betrieblich aktiviert werden können.

14. Automatisches Magazin nach Anspruch 12 oder 13, **dadurch gekennzeichnet, dass** die Auffüllmittel (35) eine funktionale Kapazität für das Austragen von Produkten aus dem Magazin beinhalten.

## Revendications

1. Magasin automatique comprenant
- une structure de support principale (11, 12),
- au moins une unité de stockage (13) comprenant un élément de rangement (14) qui s'étend le long d'un passage sans fin, et
- une pluralité d'éléments de stockage (17, 18) montés sur l'élément de rangement (14) et mobiles le long du passage sans fin en conséquence d'une activation de l'unité de stockage (13),
- les éléments de stockage étant des goupilles (18) montées sur des moyens de support (17) f ixés à l'élément de rangement (14) dans des positions espacées uniformément le long du passage sans fin et définissant des emplacements de rangement pour des produits,
- les emplacements de rangement étant distribués de façon spatiale dans l'unité de stockage et identifiés par un ensemble d'au moins quatre coordonnées,
le magasin comprenant également
- des moyens de collecte mobiles vers des emplacements prédéterminés identifiés par les coordonnées, et
- des moyens de traitement et de commande pour identifier les coordonnées correspondant à des produits sélectionnés, entraînant le mouvement des moyens de collecte vers les coordonnées, et actionnant les moyens de collecte afin de collecter les produits sélectionnés rangés dans les emplacements.

2. Magasin automatique selon la revendication 1, **caractérisé en ce qu'**au moins une des coordonnées est représentative de la position de chaque emplacement par rapport à une origine prédéterminée.

3. Magasin automatique selon la revendication 2, **caractérisé en ce que** l'élément de rangement comprend des moyens de courroie sans fin (14) avec deux côtés droits sensiblement parallèles (14a) définissant une partie plus importante du passage sans fin, reliés par des parties d'extrémité arquées (14b) s'étendant au moins partiellement autour de moyens de rouleau, roue ou poulie qui peuvent être tournés de façon sélective afin d'entraîner les moyens de courroie (14) le long du passage sans fin.

4. Magasin automatique selon l'une quelconque des revendications 1 à 3, **caractérisé en ce qu'**il comprend une pluralité d'unités de stockage (13) alignées de manière ordonnée en rangs et colonnes.

5. Magasin automatique selon la revendication 4, **caractérisé en ce que** la structure de support principale (10) comprend au moins deux parties adjacentes (10a, 10b) jointes l'une à l'autre, chacune des parties supportant un nombre prédéterminé d'unités de stockage (13).

6. Magasin automatique selon la revendication 5, **caractérisé en ce que** l'élément de rangement (14) de chaque unité de stockage (13) est mobile le long du passage sans fin indépendamment de chacun des autres éléments de rangement (14).

7. Magasin automatique selon l'une quelconque des revendications précédentes, **caractérisé en ce que** les moyens de collecte (20) comprennent une série de dispositifs de collecte (30) qui peuvent être activés de façon sélective en parallèle afin de collecter simultanément au moins deux produits rangés dans des emplacements différents.

8. Magasin automatique selon la revendication 7, **caractérisé en ce que** les moyens de collecte comprennent une pluralité d'éléments de collecte montés en alignement sur un élément de barre (21) mobile par rapport à la structure principale (10) du magasin automatique.

9. Magasin automatique selon la revendication 8, **caractérisé en ce que** chaque élément de collecte comprend un élément de collecte (32) mobile de façon sélective pour se rapprocher ou s'éloigner d'un emplacement correspondant de rangement de produit.

10. Magasin automatique selon la revendication 8, **caractérisé en ce que** l'élément de barre mobile (21) est monté afin d'être mobile de façon sélective vers le haut et vers le bas sur la structure principale (10) du magasin automatique.

11. Magasin automatique selon la revendication 10, **caractérisé en ce que** la barre mobile (21) est montée pour pivoter autour d'un axe transversal (X-X) afin de collecter les produits à partir des emplacements prédéterminés et de les déposer dans une zone de dépôt.

12. Magasin automatique selon l'une quelconque des revendications précédentes, **caractérisé en ce qu'**il comprend une structure principale (10) avec une première face (19) dans la région de laquelle les moyens de collecte (20) sont disposés, des moyens de réapprovisionnement (35) pour stocker des produits dans des emplacements sélectifs du magasin étant disposés dans la région d'une seconde face (36) et/ou d'au moins un côté du magasin.

13. Magasin automatique selon la revendication 12, **caractérisé en ce que** les moyens de collecte (20) et les moyens de réapprovisionnement (35) sont capables d'activation opérationnelle simultanée.

14. Magasin automatique selon la revendication 12 ou la revendication 13, **caractérisé en ce que** les moyens de réapprovisionnement (35) incorporent une capacité fonctionnelle pour le déchargement de produits à partir du magasin.
